(19) Europäisches Patentamt
European Patent Office
Office européen des brevets

(11) **EP 4 333 111 A1**

(12) **EUROPEAN PATENT APPLICATION**
published in accordance with Art. 153(4) EPC

(43) Date of publication:
**06.03.2024 Bulletin 2024/10**

(21) Application number: **22878972.3**

(22) Date of filing: **07.10.2022**

(51) International Patent Classification (IPC):
**H01M 4/134** (2010.01)    **H01M 4/131** (2010.01)
**H01M 4/62** (2006.01)    **H01M 4/1395** (2010.01)
**H01M 4/1391** (2010.01)    **H01M 10/052** (2010.01)
**H01M 4/02** (2006.01)

(52) Cooperative Patent Classification (CPC):
**H01M 4/02; H01M 4/131; H01M 4/134;
H01M 4/1391; H01M 4/1395; H01M 4/38;
H01M 4/48; H01M 4/62; H01M 10/052;
H01M 10/0525;** Y02E 60/10

(86) International application number:
**PCT/KR2022/015187**

(87) International publication number:
**WO 2023/059151 (13.04.2023 Gazette 2023/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.10.2021 KR 20210133394**

(71) Applicant: **LG Energy Solution, Ltd.
Seoul 07335 (KR)**

(72) Inventors:
• **KIM, Young Jae
Daejeon 34122 (KR)**
• **LEE, Jaewook
Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE COMPOSITION, NEGATIVE ELECTRODE FOR LITHIUM SECONDARY BATTERY INCLUDING SAME, LITHIUM SECONDARY BATTERY INCLUDING NEGATIVE ELECTRODE, AND METHOD FOR PREPARING NEGATIVE ELECTRODE COMPOSITION**

(57)    The present application relates to a negative electrode composition, a negative electrode for a lithium secondary battery, including the same, a lithium secondary battery including the negative electrode, and a method for preparing a negative electrode composition.

[Figure 1]

## Description

[Technical Field]

This application claims priority to and the benefit of Korean Patent Application No. 10-2021-0133394 filed in the Korean Intellectual Property Office on October 7, 2021, the entire contents of which are incorporated herein by reference.

The present application relates to a negative electrode composition, a negative electrode for a lithium secondary battery including the same, a lithium secondary battery including the negative electrode, and a method for preparing a negative electrode composition.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, as the demand for high-density energy batteries has been recently increased, studies have been actively conducted on a method of increasing the capacity using a silicon-based compound such as Si/C or SiOx, which has a capacity 10-fold or higher than that of a graphite-based material as a negative electrode active material, but a silicon-based compound, which is a high-capacity material, has a higher capacity than graphite used in the related art, but has a problem in that the volume rapidly expands in the charging process to disconnect the conductive path, resulting in deterioration in battery characteristics.

Thus, to solve problems when the silicon-based compound is used as a negative electrode active material, measures to adjust the driving potential, additionally, measures to suppress the volume expansion itself such as methods of coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate due to the measures, so that there is still a limitation in the commercialization of preparation of a battery having a negative electrode with a high content of the silicon-based compound.

In addition, a negative electrode including a silicon-based active material has a problem in that it is difficult to secure a conductive path according to charging and discharging because the volume expansion is larger than that of a negative electrode including a carbon-based active material.

Therefore, there is a need for research on a conductive material capable of preventing the conductive path from being damaged according to the volume expansion of the silicon-based compound even when the silicon-based compound is used as an active material in order to improve the capacity performance.

<Related Art Documents>

Japanese Patent Application Laid-Open No. 2009-080971

[Detailed Description of the Invention]

[Technical Problem]

When a silicon-based negative electrode is applied, three types of dot-shaped, linear, and planar conductive materials are used. However, when three types of negative electrode conductive materials are applied, the content of silicon-based active material cannot be increased, and furthermore, it is confirmed that when the BET specific surface area value of the planar conductive material is adjusted except for an expensive linear conductive material, the service life characteristics are also maintained in the same manner as in existing secondary batteries and the output characteristics are improved.

Therefore, the present application relates to a negative electrode composition, a negative electrode for a lithium secondary battery, including the same, a lithium secondary battery including the negative electrode, and a method for preparing a negative electrode composition.

[Technical Solution]

An exemplary embodiment of the present specification provides a negative electrode composition including: a silicon-based active material; a negative electrode conductive material; and a negative electrode binder, in which the negative electrode conductive material includes a dot-shaped conductive material and a planar conductive material, the planar conductive material has a BET specific surface area of 100.0 $m^2$/g or more, and the silicon-based active material is present in an amount of 60 parts by weight or more based on 100 parts by weight of the negative electrode composition.

In another exemplary embodiment provides a method for preparing a negative electrode composition, the method including: forming a mixture by mixing a negative electrode conductive material and a negative electrode binder; performing a first mixing by adding water to the mixture; and performing a second mixing by adding an active material to the mixed mixture, in which the negative electrode conductive material includes a dot-shaped conductive material and a planar conductive material, and the planar conductive material has a BET specific surface area of 100.0 $m^2$/g or more.

In another exemplary embodiment provides a negative electrode for a lithium secondary battery, including: a negative electrode current collector layer; and a negative electrode active material layer including the negative electrode composition according to the present application formed on one surface or both surfaces of the negative electrode current collector layer.

Finally, a lithium secondary battery including: a positive electrode; the negative electrode for a lithium secondary battery according to the present application; a separator provided between the positive electrode and the negative electrode; and an electrolyte is provided.

[Advantageous Effects]

In the case of a negative electrode composition according to an exemplary embodiment of the present invention, upon using a silicon-based active material which is a high-capacity material in order to manufacture a high-capacity battery, a conductive material includes a dot-shaped conductive material and a planar conductive material, and the BET specific surface area of the planar conductive material satisfies 100.0 $m^2$/g or more, so that the negative electrode composition according to an exemplary embodiment of the present invention has a feature in which the service life characteristics of the existing lithium secondary battery are not greatly affected and output characteristics at a high C-rate are excellent because points where the battery can be charged and discharged are increased.

In particular, in the negative electrode composition according to an exemplary embodiment of the present invention, a planar conductive material whose BET specific surface area is 100.0 $m^2$/g or more is used as a planar conductive material, and by adjusting the specific surface area to be higher than that of a planar conductive material generally used and adjusting the specific surface area of a dot-shaped or linear conductive material with a high specific surface area used in the related art to low levels, the negative electrode composition according to an exemplary embodiment of the present invention has an effect in which the service life characteristics are also maintained in the same manner as in existing secondary batteries and output characteristics become excellent. That is, it is mainly characterized in that high energy density, output characteristics, and service life characteristics are all improved by reducing the specific surface area of a dot-shaped conductive material which causes problems in generating high-temperature gas, and adjusting the specific surface area of the planar conductive material to the above range.

Further, the case of using an existing silicon-based active material has a feature that volume expansion during charging and discharging can also be minimized as the negative electrode composition according to the present invention is used.

[Brief Description of Drawings]

FIG. 1 is a view illustrating the stacking structure of a negative electrode for a lithium secondary battery according to an exemplary embodiment of the present application.

FIG. 2 is a view illustrating the stacking structure of a lithium secondary battery according to an exemplary embodiment of the present application.

<Explanation of Reference Numerals and Symbols>

10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

[Best Mode]

Prior to the description of the present invention, some terms will be first defined.
When one part "includes" one constituent element in the present specification, unless otherwise specifically described, this does not mean that another constituent element is excluded, but means that another constituent element may be further included.
In the present specification, 'p to q' means a range of 'p or more and q or less'.
In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.
In the present specification, "Dn" means the average particle diameter, and means the particle diameter at the n% point of the cumulative distribution of the number of particles according to the particle diameter. That is, D50 is the particle diameter at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.
In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.
In the present specification, the 'polymer' is understood to be used in a broad sense, including a copolymer, unless otherwise specified as a 'homopolymer'.
In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.
Hereinafter, the present invention will be described in detail with reference to drawings, such that a person with ordinary skill in the art to which the present invention pertains can easily carry out the present invention. However, the present invention can be implemented in various different forms, and is not limited to the following description.
An exemplary embodiment of the present specification provides a negative electrode composition including: a silicon-based active material; a negative electrode conductive material; and a negative electrode binder, in which the negative electrode conductive material includes a dot-shaped conductive material and a planar conductive material, the planar conductive material has a BET specific surface area of 100.0 m$^2$/g or more, and the silicon-based active material is present in an amount of 60 parts by weight or more based on 100 parts by weight of the negative electrode composition.
In the case of a negative electrode composition according to an exemplary embodiment of the present invention, upon using a silicon-based active material which is a high-capacity material in order to manufacture a high-capacity battery, a conductive material includes a dot-shaped conductive material and a planar conductive material, and the BET specific surface area of the planar conductive material satisfies 100.0 m$^2$/g or more, so that the negative electrode composition according to an exemplary embodiment of the present invention has a feature in which the service life characteristics of the existing lithium secondary battery are not greatly affected and output characteristics at a high C-rate are excellent because points where the battery can be charged and discharged are increased.

In an exemplary embodiment of the present application, provided is a negative electrode composition in which the silicon-based active material includes one or more selected from the group consisting of SiOx (x=0), SiOx (0<x<2), SiC, and a Si alloy.

In an exemplary embodiment of the present application, provided is a negative electrode composition in which the silicon-based active material includes one or more selected from the group consisting of SiOx (x=0), SiOx (0<x<2) and metal impurities, and includes the SiOx (x=0) in an amount of 70 parts by weight or more based on 100 parts by weight of the silicon-based active material.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, for the silicon-based active material, particularly, pure silicon (Si) may be used as the silicon-based active material. The use of pure silicon (Si) as the silicon-based active material may mean that based on the total 100 parts by weight of the silicon-based active material as described above, pure Si particles (SiOx (x=0)), which are not bound to other particles or elements, are included in the above range.

Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the charging and discharging process.

Therefore, in the case of the present invention, while using only the silicon-based active material as a negative electrode active material in order to improve the capacity performance and achieve a high energy density, the existing problems were solved using a negative electrode conductive material including a dot-shaped conductive material and a planar-like conductive material, in which the planar conductive material has a BET specific surface area of 100.0 m$^2$/g or more in order to solve the problems as described above.

Meanwhile, the silicon-based active material of the present invention may have an average particle diameter (D50) of 5 um to 10 um, specifically 5.5 um to 8 $\mu$m, and more specifically 6 um to 7 um. When the average particle diameter is less than 5 um, the specific surface area of the particles increases excessively, resulting in an excessive increase in the viscosity of the negative electrode slurry. Accordingly, the particles constituting the negative electrode slurry are not smoothly dispersed. Furthermore, when the size of the silicon-based active material is excessively small, a composite composed of a conductive material and a binder in the negative electrode slurry makes a contact area between silicon particles and conductive materials reduced, so that the possibility of breaking the conductive network is increased, thereby decreasing the capacity retention rate. Meanwhile, when the average particle diameter is more than 10 $\mu$m, excessively large silicon particles are present, so that the surface of the negative electrode is not smooth, and accordingly, non-uniformity in current density occurs during charging and discharging. Further, when the silicon particles are excessively large, processability deteriorates because the phase stability of the negative electrode slurry becomes unstable. Accordingly, the capacity retention rate of the battery deteriorates.

In an exemplary embodiment of the present application, the silicon-based active material generally has a characteristic BET specific surface area. The BET specific surface area of the silicon-based active material is preferably 0.01 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET specific surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode composition in which the silicon-based active material is present in an amount of 60 parts by weight or more based on 100 parts by weight of the negative electrode composition.

In another exemplary embodiment, the silicon-based active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 80 parts by weight or less, based on 100 parts by weight of the negative electrode composition.

The negative electrode composition according to the present application has a feature in which by using a negative electrode binder and a specific negative electrode conductive material, which can suppress the volume expansion rate in the charging and discharging process even though a silicon-based active material having a remarkably high capacity is used in the above range, the performance of the negative electrode does not deteriorate and output characteristics at charging and discharging are excellent even though the above range is included.

In an exemplary embodiment of the present application, the silicon-based active material may have a non-spherical form, and the sphericity thereof is, for example, 0.9 or less, for example 0.7 to 0.9, for example, 0.8 to 0.9, and for example, 0.85 to 0.9.

In the present application, the sphericity is determined by the following Equation 1, where A is the area and P is the boundary line.

$$[\text{Equation 1}]$$

$$4\pi A/P^2$$

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, there is a limitation that the volume rapidly expands in the process of charging/discharging to impair the conductive path formed in the negative electrode active material layer, consequently resulting in deterioration in the performance of the battery.

Therefore, in an exemplary embodiment of the present application, it is possible to use the negative electrode conductive material including a dot-shaped conductive material and a planar conductive material, in which the planar conductive material has a BET specific surface area of 100.0 $m^2$/g or more. By using the negative electrode conductive material, since a conductive material may be constantly located on the surface of the particles, between the particles and between the particle aggregates even when the silicon-based active material expands, a conductive path formed by the conductive material is not affected by volume expansion, so that the performance of the battery may be excellently maintained.

In an exemplary embodiment of the present application, the dot-shaped conductive material may be used to enhance the conductivity of the negative electrode, and means a conductive material in the form of a dot or sphere having conductivity without inducing a chemical change. Specifically, the dot-shaped conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dot-shaped conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In the case of the negative electrode composition according to the present application, a planar conductive material whose BET specific surface area is 100.0 $m^2$/g or more is applied in order to improve the output performance of a secondary battery, and in the case of silicon-based negative electrodes, output characteristics are the most important in order to obtain rapid charging characteristics, and existing secondary batteries are used by adjusting specific surface area of the dot-shaped conductive materials or CNT-based conductive materials used for the performance thereof to a high specific surface area, but in such cases, the service life may be improved by reinforcing conductive materials and binder composites as fillers, but a problem in that the output characteristics deteriorate occurred.

Therefore, the conductive material according to the present application includes a dot-shaped conductive material and a planar conductive material, the BET specific surface area of the planar conductive material is adjusted to 100.0 $m^2$/g or more, service life characteristics may be maintained at a level equivalent to those of existing lithium secondary batteries by satisfying the above range of the specific surface area using the dot-shaped conductive material and the increase in resistance according to the service life is low, so that the negative electrode composition according to the present application has a feature in which output characteristics are maintained at excellent levels for a long time.

In an exemplary embodiment of the present application, the dot-shaped conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may increase the surface contact between silicon particles in the negative electrode to improve conductivity and simultaneously suppress the disconnection of the conductive path due to the volume expansion, and in the present application, the planar conductive material is a conductive material that includes a large range of planar type, and may be used as a concept including both a bulk conductive material and a plate-like conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 um to 7 um, specifically 3 um to 6 $\mu$m, and more specifically 4 um to 5 um. When the average particle diameter satisfied the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, there is provided a negative electrode composition, wherein the planar conductive material has a D10 of 0.5 um or more and 1.5 um or less, a D50 of 2.5 um or more and 3.5 um or less, and a D90 of 7.0 um or more and 15.0 um or less.

In an exemplary embodiment of the present application, the planar conductive material may have a BET specific surface area of 100m$^2$/g or more.

In another exemplary embodiment, the planar conductive material may have a BET specific surface area of 100 m$^2$/g or more and 500 m$^2$/g or less, preferably 150 m$^2$/g or more and 400 m$^2$/g or less, and more preferably 200 m$^2$/g or more and 350 m$^2$/g or less.

As described above, the conductive material according to the present application includes a dot-shaped conductive material and a planar conductive material, the BET specific surface area of, particularly, the planar conductive material is adjusted to 100.0 m$^2$/g or more, service life characteristics may be maintained at a level equivalent to those of existing lithium secondary batteries by satisfying the above range of the specific surface area using the dot-shaped conductive material and the increase in resistance according to the service life is low, so that the negative electrode composition according to the present application has a feature in which output characteristics are maintained at excellent levels for a long time.

As other negative electrode conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side or intertwined in substantially the same orientation as a longitudinal axis of the carbon nanotube unit. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

However, the present invention is characterized in that the linear conductive material as described above is not used, a dot-shaped conductive material and a planar-like conductive material are included as a conductive material, and in particular, the output characteristics of the secondary battery of the present invention are improved by adjusting the BET specific surface area of the planar conductive material.

In an exemplary embodiment of the present application, provided is a negative electrode composition, in which the negative electrode conductive material is included in an amount of 10 parts by weight or more and 40 parts by weight or less, based on 100 parts by weight of the negative electrode composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less, based on 100 parts by weight of the negative electrode composition.

In an exemplary embodiment of the present application, provided is a negative electrode composition which includes 35 parts by weight to 65 parts by weight of the dot-shaped conductive material; and 35 parts by weight to 65 parts by weight of the planar conductive material based on 100 parts by weight of the negative electrode conductive material.

In another exemplary embodiment, the dot-shaped conductive material may be included in an amount of 35 to 65 parts by weight, preferably 40 to 65 parts by weight, and more preferably 40 to 60 parts by weight based on 100 parts by weight of the negative electrode conductive material.

In another exemplary embodiment, the planar conductive material may be included in an amount of 35 to 65 parts by weight, preferably 40 to 65 parts by weight, and more preferably 40 to 60 parts by weight based on 100 parts by weight of the negative electrode conductive material.

In an exemplary embodiment of the present application, the negative electrode conductive material includes a dot-shaped conductive material and a planar conductive material, and the ratio of the dot-shaped conductive material : the planar conductive material may satisfy 1:0.51 to 1:1.51.

In an exemplary embodiment of the present application, the negative electrode conductive material includes a dot-shaped conductive material and a planar conductive material, and the ratio of the dot-shaped conductive material :

the planar conductive material may satisfy 1:1.

The ratio may mean a weight ratio.

In an exemplary embodiment of the present application, the negative electrode conductive material includes a dot-shaped conductive material and a planar conductive material, and as the dot-shaped conductive material and the planar conductive material satisfy the above composition and ratio, respectively, the conductive material is effectively located in a silicon-based active material network structure in the form of points and planes, particularly as the negative electrode conductive material includes two types of conductive material, i.e. dot-shaped and planar conductive materials, and satisfies the above range, particles having different sizes are mixed to have an effect of increasing the packing density, so that the improvement in performance of the electrode including the conductive material may be elicited.

In addition, the negative electrode for a lithium secondary battery according to the present invention does not significantly affect the service life characteristics of an existing lithium secondary battery, has many points where the battery can be charged and discharged, and thus has excellent output characteristics at high C-rate.

The negative electrode conductive material according to the present application has a completely different configuration from a conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when rolled, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a negative electrode conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various polymers thereof.

The negative electrode binder according to an exemplary embodiment of the present application plays a role of supporting the silicon-based active material and the negative electrode conductive material in order to prevent the distortion and structural deformation of the negative electrode structure in the volume expansion and relaxation of the silicon-based active material, and when the above role is satisfied, all general negative electrode binders can be applied, specifically, a water-based binder can be used, and more specifically, a PAM-based binder can be used.

In an exemplary embodiment of the present application, the negative electrode binder may be included in an amount of 30 parts by weight or less, preferably 25 parts by weight or less, and more preferably 20 parts by weight or less, and may be included in an amount of 5 parts by weight or more and 10 parts by weight or more, based on 100 parts by weight of the negative electrode composition.

In an exemplary embodiment of the present application, provided is a method for preparing a negative electrode composition, the method including: forming a mixture by mixing a negative electrode conductive material and a negative electrode binder; performing a first mixing by adding water to the mixture; and performing a second mixing by adding an active material to the mixed mixture, in which the negative electrode conductive material includes a dot-shaped conductive material and a planar conductive material, and the planar conductive material has a BET specific surface area of 100.0 m²/g or more.

In the method for preparing the negative electrode composition, each composition contained in the negative electrode composition may be the same as described above.

In an exemplary embodiment of the present application, provided is a method for preparing a negative electrode composition in which in the first mixing and second mixing steps, mixing is performed at 2,000 rpm to 3,000 rpm for 10 minutes to 60 minutes.

In an exemplary embodiment of the present application, provided is a negative electrode for a lithium secondary battery, including: a negative electrode current collector layer; and a negative electrode active material layer including the negative electrode composition according to the present application formed on one surface or both surfaces of the negative electrode current collector layer.

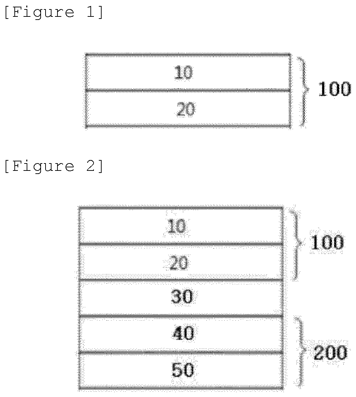

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

In an exemplary embodiment of the present application, the negative electrode current collector layer generally has a thickness of 1 um to 100 um. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine convex and concave irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 um or more and 100 um or less, and the negative electrode active material layer has a thickness of 20 um or more and 500 um or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the negative electrode conductive material; and the negative electrode binder, which are included in the negative electrode active material layer, and in particular, as the silicon-based active material; and the negative electrode conductive material according to the present application have specific compositions and contents, the porosity satisfies the above range, and accordingly, it is characterized in that electrical conductivity and resistance in the electrode have appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 um to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_2$, $LiMn_2O_2$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.6$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.6$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

In an exemplary embodiment of the present application, the positive electrode active material includes a lithium composite transition metal compound including nickel (Ni), cobalt (Co) and manganese (Mn), the lithium composite transition metal compound includes single particles or secondary particles, and the single particles may have an average particle diameter (D50) of 1 um or more.

For example, the single particles may have an average particle diameter (D50) of 1 um or more and 12 um or less, 1 um or more and 8 um or less, 1 um or more and 6 um or less, more than 1 um and 12 um or less, more than 1 um and 8 um or less, or more than 1 um and 6 um or less.

Even though the single particles are formed as small particle diameters having an average particle diameter (D50) of 1 um or more and 12 um or less, the particle strength may be excellent. For example, the single particles may have a particle strength of 100 to 300 MPa when rolled with a force of 650 kgf/cm$^2$. As a result, even though the single particles are rolled with a strong force of 650 kgf/cm$^2$, a phenomenon in which the number of particulates in the electrode is increased due to cracking of the particles is alleviated, thereby improving the service life characteristics of the battery.

The single particles may be prepared by mixing a transition metal precursor and a lithium raw material and firing the resulting mixture. The secondary particles may be prepared by a method different from the single particles, and the composition thereof may be the same as or different from that of the single particles.

The method of forming the single particles is not particularly limited, but in general, single particles may be formed by increasing the firing temperature to achieve overfiring, and single particles may be prepared by a method of using an additive such as a grain growth promoter that helps overfiring or changing a starting material, and the like.

For example, the firing is performed at a temperature capable of forming single particles. In order to form the single particles, the firing needs to be performed at a temperature higher than that in the preparation of the secondary particles, and for example, when the composition of the precursor is the same, the firing needs to be performed at a temperature about 30°C to 100°C higher than that when the secondary particles are prepared. The firing temperature for forming the single particles may vary depending on the metal composition in the precursor, and for example, when a high-Ni NCM-based lithium composite transition metal oxide having a nickel (Ni) content of 80 mol% or more is desired to be formed as a single particle, the firing temperature may be 700°C to 1000°C, preferably approximately 800°C to 950°C. When the firing temperature satisfies the above range, a positive electrode active material including single particles with excellent electrochemical properties may be prepared. When the firing temperature is less than 790°C, a positive electrode active material including a lithium composite transition metal compound in the form of secondary particles may be prepared, and when the firing temperature exceeds 950°C, the firing may occur excessively, so that a layered crystal structure may not be properly formed, thereby degrading the electrochemical properties.

In the present specification, the single particle is a term used to differentiate from secondary particles formed by aggregation of tens to hundreds of primary particles in the related art, and is a concept including the form of a single particle composed of one primary particle and a pseudo-single particle which is an aggregate of 30 or less primary particles.

Specifically, in the present invention, the single particle may be in the form of a single particle composed of one primary particle or a pseudo-single particle which is an aggregate of 30 or less primary particles, and secondary particles may be in the form of aggregation of several hundred primary particles.

In an exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be in the form of a single particle composed of one primary particle or a pseudo-single particle which is an aggregate of 30 or less primary particles, and secondary particles may be in the form of aggregation of several hundred primary particles.

The above-described lithium composite transition metal compound may further include secondary particles. A secondary particle refers to a form formed by aggregation of primary particles, and may be distinguished from the concept of a single particle including the form of one primary particle, one single particle or a pseudo-single particle which is an aggregate of 30 or less primary particles.

The secondary particles may have a particle diameter (D50) of 1 um to 20 um, 2 um to 17 um, preferably 3 um to 15 um. The secondary particles may have a specific surface area (BET) of 0.05 m²/g to 10 m²/g, preferably 0.1 m²/g to 1 m²/g, and more preferably 0.3 m²/g to 0.8 m²/g.

In additional exemplary embodiments of the present application, the secondary particle is an aggregate of primary particles, and the primary particles have an average particle diameter (D50) of 0.5 um to 3 um. Specifically, the secondary particle may be in the form of aggregation of several hundred primary particles, and the primary particles may have an average particle diameter (D50) of 0.6 um to 2.8 um, 0.8 um to 2.5 um, or 0.8 um to 1.5 um.

When the average particle diameter (D50) of the primary particles satisfies the above range, a single particle positive electrode active material with excellent electrochemical properties may be formed. When the average particle diameter (D50) of the primary particles is too small, the number of aggregated primary particles forming the lithium-nickel-based oxide particles increases, so the effect of suppressing the occurrence of particle cracking during rolling is reduced, and when the average particle diameter (D50) of the primary particles is too large, the lithium diffusion path inside the primary particles becomes long, so the resistance increases and the output characteristics may deteriorate.

According to additional exemplary embodiments of the present application, the average particle diameter (D50) of the single particles is characterized by being smaller than the average particle diameter (D50) of the secondary particles. Therefore, even though the single particles are formed of small particle diameters, the single particles may have excellent particle strength, and the excellent particle strength may alleviate a phenomenon in which the number of particulates in the electrode is increased due to cracking of the particles, thereby improving the service life characteristics of the battery.

In an exemplary embodiment of the present application, the average particle diameter (D50) of the single particles is 1 um to 18 um smaller than the average particle diameter (D50) of the secondary particles.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even though formed with a small particle diameter, and thus, the excellent particle strength alleviates a phenomenon in which the number of particulates in the electrode is increased due to cracking of the particles, so that there is an effect of improving the service life characteristics and improving the energy density of the battery.

According to additional exemplary embodiments of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles within the above range are included, excellent battery characteristics may be exhibited in combination with the above-described negative electrode material. In particular, when the amount of the single particles is 15 parts by weight or more, a phenomenon in which the number of particulates in the electrode is increased due to particle cracking during the rolling process after manufacturing the electrode may be alleviated, thereby improving the service life characteristics of the battery.

In an exemplary embodiment of the present application, the lithium composite transition metal compound may further include secondary particles, and the amount of the secondary particles may be 85 parts by weight or less based on 100 parts by weight of the positive electrode active material. The amount of the secondary particles may be 80 parts by weight or less, 75 parts by weight or less, or 70 parts by weight or less based on 100 parts by weight of the positive electrode active material. The amount of the secondary particles may be 0 parts by weight or more based on 100 parts by weight of the positive electrode active material.

When the above range is satisfied, the above-described effect due to the presence of the positive electrode active material of single particles may be maximized. When the positive electrode active material of the secondary particles is included, the components may be the same as those exemplified as the above-described single particle positive electrode active material, or may be different components, and may mean a form of aggregation of single particle forms.

In an exemplary embodiment of the present application, the positive electrode active material may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less, in 100 parts by weight of the positive electrode active material layer.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, ethylene carbonate and propylene carbonate which are cyclic carbonates may be preferably used because they have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Examples>**

<Manufacture of negative electrode>

Example 1: Manufacture of negative electrode

A negative electrode slurry was prepared by adding Si (average particle diameter (D50): 3.5 um) as a silicon-based active material, a first conductive material, a second conductive material, and polyacrylamide as a binder at a weight ratio of 70:10:10:10 to distilled water as a solvent for forming a negative electrode slurry (solid concentration of 25 wt%).

The first conductive material was carbon black A (specific surface area: 63 $m^2$/g, diameter: 35 nm, and volatile matter: 0.15%), and the second conductive material was plate-like graphite B(specific surface area: 235 $m^2$/g, average particle diameter (D50): 3.2 um).

After the first conductive material, the second conductive material, the binder and water were dispersed at 2500 rpm for 30 minutes using a homo mixer as a mixing method, an active material was added thereto, and then the resulting mixture was dispersed at 2500 rpm for 30 minutes to prepare a slurry.

Both surfaces of a copper current collector (thickness: 8 um) as a negative electrode current collector were coated with the negative electrode slurry in a loading amount of 85 mg/25cm$^2$, and the copper current collector was roll-pressed and dried in a vacuum oven at 130°C for 10 hours to form a negative electrode active material layer (thickness: 33 um), which was employed as a negative electrode (thickness of the negative electrode: 41 um, the porosity of the negative electrode 40.0%).

**Example 2: Manufacture of negative electrode**

A negative electrode was manufactured in the same manner as in Example 1, except that plate-like graphite B (specific surface area: 295 $m^2$/g, average particle diameter (D50): 3.2 $\mu$m) was used instead of the plate-like graphite B (specific surface area: 30 $m^2$/g, average particle diameter (D50): 3.2 $\mu$m) as the second conductive material in Example 1.

**Example 3: Manufacture of negative electrode**

A negative electrode was manufactured in the same manner as in Example 1, except that Si (average particle diameter (D50): 3.5 $\mu$m) as the silicon-based active material, the first conductive material, the second conductive material, and polyacrylamide as the binder were used at a weight ratio of 70:12:8:10, in Example 1.

**Example 4: Manufacture of negative electrode**

A negative electrode was manufactured in the same manner as in Example 1, except that Si (average particle diameter (D50): 3.5 $\mu$m) as the silicon-based active material, the first conductive material, the second conductive material, and polyacrylamide as the binder were used at a weight ratio of 70:8:12:10, in Example 1.

**Reference Example 1: Manufacture of negative electrode**

A negative electrode was manufactured in the same manner as in Example 1, except that Si (average particle diameter (D50): 3.5 $\mu$m) as the silicon-based active material, the first conductive material, the second conductive material, and polyacrylamide as the binder were used at a weight ratio of 70:15:5:10, in Example 1.

**Reference Example 2: Manufacture of negative electrode**

A negative electrode was manufactured in the same manner as in Example 1, except that Si (average particle diameter (D50): 3.5 $\mu$m) as the silicon-based active material, the first conductive material, the second conductive material, and polyacrylamide as the binder were used at a weight ratio of 70:5:15:10, in Example 1.

**Comparative Example 1: Manufacture of negative electrode**

A negative electrode of Comparative Example 1 was manufactured in the same manner as in Example 1, except that the second conductive material applied in Example 1 was changed to plate-like graphite A (specific surface area: 17 m$^2$/g, average particle diameter (D50): 3.5 $\mu$m).

**Comparative Example 2: Manufacture of negative electrode**

A negative electrode was manufactured in the same manner as in Example 1, except that Si (average particle diameter (D50): 3.5 $\mu$m) as the silicon-based active material, the first conductive material, and polyacrylamide as the binder were used at a weight ratio of 70:20:10, in Example 1.

**Comparative Example 3: Manufacture of negative electrode**

A negative electrode was manufactured in the same manner as in Example 1, except that Si (average particle diameter (D50): 3.5 $\mu$m) as the silicon-based active material, the second conductive material, and polyacrylamide as the binder were used at a weight ratio of 70:20:10, in Example 1.

**Comparative Example 4: Manufacture of negative electrode**

A negative electrode was manufactured in the same manner as in Example 1, except that Si (average particle diameter (D50): 3.5 $\mu$m) as the silicon-based active material, the second conductive material, a linear conductive material (SWCNT) whose BET specific surface area satisfies about 1000 to 1500 m$^2$/g and aspect ratio is 10000 or more, and polyacrylamide as the binder were used at a weight ratio of 70:18:2:10, in Example 1.

**Comparative Example 5: Manufacture of negative electrode**

A negative electrode of Comparative Example 5 was manufactured in the same manner as in Example 1, except that Si (average particle diameter (D50): 3.5 $\mu$m) as the silicon-based active material, the first conductive material, the second conductive material, and polyacrylamide as the binder were used at a weight ratio of 55:15:10:20, in Example 1.

**Comparative Example 6: Manufacture of negative electrode**

A negative electrode of Comparative Example 6 was manufactured in the same manner as in Example 1, except that Si (average particle diameter (D50): 3.5 $\mu$m) as the silicon-based active material, the first conductive material, the second conductive material, a linear conductive material (SWCNT) whose BET specific surface area satisfies about 1000 to 1500 m$^2$/g and aspect ratio is 10000 or more, and polyacrylamide as the binder were used at a weight ratio of 55:15:10:2:20, in Example 1.

**<Manufacture of secondary battery>**

A positive electrode slurry was prepared by adding $LiNi_{0.6}Co_{0.2}Mn_{0.2}O_2$ (average particle diameter (D50) : 15 um) as a positive electrode active material, carbon black (product name: Super C65, manufacturer: Timcal) as a conductive material, and polyvinylidene fluoride (PVdF) as a binder at a weight ratio of 97:1.5:1.5 to N-methyl-2-pyrrolidone (NMP) as a solvent for forming a positive electrode slurry (solid concentration of 78 wt%).

Both surfaces of an aluminum current collector (thickness: 12 um) as a positive electrode current collector were coated with the positive electrode slurry in a loading amount of 537 mg/25 cm$^2$, and the aluminum current collector was roll-pressed and dried in a vacuum oven at 130°C for 10 hours to form a positive electrode active material layer (thickness: 65 um), thereby preparing a positive electrode (thickness of the positive electrode: 77 um, porosity of 260).

The secondary battery of Example 1 was prepared by interposing a polyethylene separator between the positive electrode and the negative electrode of Example 1 and injecting an electrolyte thereinto.

The electrolyte was obtained by adding 3 wt% of vinylene carbonate based on the total weight of the electrolyte to an organic solvent in which fluoroethylene carbonate (FEC) and diethyl carbonate (DEC) were mixed at a volume ratio of 30:70 and adding $LiPF_6$ as a lithium salt at a concentration of 1 M thereto.

In the manufacture of the secondary battery, secondary batteries were each manufactured in the same manner as described above, except that the negative electrodes of the Examples and Comparative Examples were used instead of the negative electrode of Example 1.

**Experimental Example 1: Evaluation of service life of secondary battery**

The secondary batteries manufactured in the Examples and the Comparative Examples were subjected to service life evaluation using an electrochemical charger/discharger and the capacity retention rate was evaluated. The secondary batteries were 1) charged (0.33 C CC/CV charging 4.2 V 0.05 C cut) and discharged (0.33 C CC discharging 3.0 V cut), and were charged and discharged by employing the aforementioned charging and discharging as a first cycle and from a second cycle under 2) charging (1.0 C CC/CV charging 4.2 V 0.05 C cut) and discharging (0.5 C CC discharging 3.0 V cut) conditions.

The capacity retention rate in the Nth cycle was evaluated by the following equation. The results are shown in the following Table 1.

Capacity retention rate (%) = {(Discharge capacity in the Nth cycle)/(Discharge capacity in the 1st cycle)} X 100

[Table 1]

|  | Capacity retention rate (based on @200cycle) |
|---|---|
| Example 1 | 84.76 |
| Example 2 | 85.14 |
| Example 3 | 82.44 |
| Example 4 | 81.35 |
| Reference Example 1 | 77.56 |
| Reference Example 2 | 75.31 |
| Comparative Example 1 | 84.29 |
| Comparative Example 2 | 71.15 |
| Comparative Example 3 | 65.38 |
| Comparative Example 4 | 27.24 |
| Comparative Example 5 | 82.55 |
| Comparative Example 6 | 71.77 |

**Experimental Example 2: Evaluation of rate of increase in resistance of secondary battery**

The secondary batteries manufactured in the Examples and Comparative Examples were subjected to service life evaluation using an electrochemical charger/discharger, and a rate of increase in resistance was confirmed by performing resistance measurement every 50 cycles during the evaluation.

For resistance evaluation, the secondary battery is fully charged by performing charging (0.33 CC/CV charging 4.2 V 0.05 C cut) after 50 cycles of the service life evaluation are completed. And then, the secondary battery is discharged (0.33 C CC discharging, cut at 50% of the charge capacity) to adjust the state of charge to 50%, and then discharged (2.5 C CC discharging, 30 s cut). Thereafter, a 50 cycle service life evaluation is performed in the same manner, and then the same resistance evaluation is performed.

Resistance is calculated according to the following equation.

$$\text{Resistance (R)} = (\text{Voltage (V) in resting state}$$

$$\text{before 2.5 C discharging} - \text{Voltage (V) after 30 s}$$

$$\text{discharging})/\text{Discharge current (A)}$$

The rate of increase in resistance was confirmed by calculating the results measured before the service life evaluation into values each measured based on 0 cycle, and the results are as shown in the following Table 2.

[Table 2]

|  | 0 cycle | 50 cycles | 100 cycles | 150 cycles | 200 cycles |
|---|---|---|---|---|---|
| Example 1 | 0 | 2.16 | 7.35 | 14.71 | 23.37 |
| Example 2 | 0 | 1.81 | 6.74 | 13.11 | 21.46 |
| Example 3 | 0 | 2.14 | 7.38 | 14.62 | 23.42 |
| Example 4 | 0 | 2.23 | 7.26 | 14.53 | 23.27 |
| Reference Example 1 | 0 | 3.91 | 10.47 | 19.74 | 31.98 |
| Reference Example 2 | 0 | 4.15 | 10.65 | 19.42 | 31.71 |
| Comparative Example 1 | 0 | 4.24 | 10.60 | 19.07 | 30.9 |
| Comparative Example 2 | 0 | 5.32 | 11.21 | 20.04 | 32.45 |
| Comparative Example 3 | 0 | 7.42 | 13.45 | 22.45 | 34.49 |
| Comparative Example 4 | 0 | 6.31 | 12.28 | 21.87 | 33.74 |
| Comparative Example 5 | 0 | 4.79 | 11.84 | 19.83 | 31.24 |
| Comparative Example 6 | 0 | 6.13 | 12.14 | 21.84 | 33.48 |

That is, as can be confirmed in the above experiment, the service life evaluation results in Table 1 show that the capacity retention rates of Example 1 and Comparative Example 1 are similar, but Table 2 showing the rate of increase in resistance for each service life shows that Example 1 is better. A low rate of increase in resistance means that the current transfer of the Si electrode is excellent, and it can be said that the conductive material of Example 1, in which a planar conductive material having a larger specific surface area is used, constitutes a conductive network between the active materials. However, the reason why there is insignificant improvement in service life performance is that the constitution of the network is excellent, and thus effective for current transmission, but the conductive material is not a material capable of suppressing the expansion and contraction of silicon.

In the case of Example 2, a material with a higher specific surface area than that of Example 1 was applied, and it could be confirmed that the performance is better than the Comparative Examples because Example 2 is advantageous in setting a conductive network due to a high specific surface area.

In the case of Examples 3 and 4, the ratio of the planar conductive material and the dot-shaped conductive material was changed, and it could be confirmed that when the dot-shaped conductive material was slightly more included than the planar conductive material, the performance of Examples 3 and 4 was slightly better than that of the planar conductive material. This is because a dot-shaped conductive material having a network-type structure and a branch structure capable of overlapping effect is applied in a slightly large amount compared to plate-like graphite having a planar form and a large particle form, and the silicon-based active material exhibits an effect advantageous in maintaining the structure during expansion/contraction.

Reference Examples 1 and 2 correspond to cases where the content of the dot-shaped conductive material is much higher than that of the planar conductive material, or the content of the planar conductive material is much higher than that of the dot-shaped conductive material. In these cases, it could be confirmed that the performance is better than those of some of the Comparative Examples, but the performance is not good compared to those of Examples 1 to 4. That is, this may be interpreted in the same manner as the interpretation of the results of Examples 3 and 4, and it is possible to confirm the effect depending on the content of the dot-shaped conductive material and the planar conductive material which play their respective roles.

In the case of Comparative Examples 2 and 3, each material was applied alone, and it can be confirmed that the performance is inferior to those of the Examples. It is determined that this is because each of Comparative Examples 2 and 3 has a disadvantage for the material. The dot-shaped conductive material has excellent conductivity and weak structural characteristics, but has very small particles, and thus creates microscopic pores in the electrode to adversely affect the wettability of the electrolyte and the migration of Li ions. Since the planar conductive material has excellent conductivity and large particles, big pores are created, so that the same problems as in the dot-shaped conductive material do not occur, but a short circuit occurs in a silicon-based electrode due to volume expansion/contraction of the active material, and the planar conductive material lacks connection points compared to the dot-shaped conductive material, and thus adversely affects the service life performance.

That is, as can be confirmed in Comparative Examples 2 and 3, the reason why the performance is not as good as in the Examples is that the above-described shortcomings cannot be compensated for as the dot-shaped conductive material or the planar conductive material is applied alone.

In the case of Comparative Examples 4 and 6, a linear conductive material was added, and when a linear conductive material having a very large specific surface area is applied, dispersion is adversely affected while affecting the viscosity of the negative electrode slurry. Accordingly, the dispersity of the conductive network in the entire electrode was lowered, resulting in poor performance.

Comparative Example 5 corresponds to the case where the proportion of the silicon-based active material is decreased. As can be seen in Table 1, it could be confirmed that Comparative Example 5 shows a service life performance similar to those of the Examples, but as the proportion of the silicon-based active material is decreased, the capacity is decreased accordingly. That is, in the case of designing as in Comparative Example 5, although the service life performance was excellent, it was not possible to achieve high energy density and high capacity, which are advantages of applying the silicon-based active material, and the thickness of the electrode needs to be increased in order to satisfy the same capacity level as those of the Examples, and accordingly, a rapid charge problem and an electrode detachment phenomenon occurred.

That is, in the case of a negative electrode composition according to an exemplary embodiment of the present invention, it could be confirmed that upon using a silicon-based active material (Si particles) which is a high-capacity material in order to manufacture a high-capacity battery, the conductive material includes a dot-shaped conductive material and a planar conductive material, and the BET specific surface area of the planar conductive material satisfies 100.0 m$^2$/g or more, so that the negative electrode composition according to an exemplary embodiment of the present invention has a feature in which the negative electrode composition does not greatly affect the service life characteristics of the existing lithium secondary battery as in the existing case and output characteristics at a high C-rate are excellent because points where the battery can be charged and discharged are increased depending on the planar conductive material.

## Claims

1. A negative electrode composition comprising:

   a silicon-based active material;
   a negative electrode conductive material; and
   a negative electrode binder,
   wherein the negative electrode conductive material comprises a dot-shaped conductive material and a planar conductive material,
   the planar conductive material has a BET specific surface area of 100.0 m$^2$/g or more, and
   the silicon-based active material is present in an amount of 60 parts by weight or more based on 100 parts by weight of the negative electrode composition.

2. The negative electrode composition of claim 1, wherein the negative electrode composition comprises 35 to 65 parts by weight of the dot-shaped conductive material; and 35 to 65 parts by weight of the planar conductive material based on 100 parts by weight of the negative electrode conductive material.

3. The negative electrode composition of claim 1, wherein the weight ratio of the dot-shaped conductive material : the planar conductive material satisfies 1:0.51 to 1:1.51.

4. The negative electrode composition of claim 1, wherein the negative electrode conductive material is comprised in an amount of 10 parts by weight or more and 40 parts by weight or less, based on 100 parts by weight of the negative electrode composition.

5. The negative electrode composition of claim 1, wherein the planar conductive material has a D10 of 0.5 um or more and 1.5 um or less, a D50 of 2.5 um or more and 3.5 um or less, and a D90 of 7.0 um or more and 15.0 um or less.

6. The negative electrode composition of claim 1, wherein the silicon-based active material comprises one or more selected from the group consisting of $SiO_x$ (x=0), $SiO_x$ (0<x<2), SiC, and a Si alloy.

7. The negative electrode composition of claim 1, wherein the silicon-based active material comprises one or more selected from the group consisting of $SiO_x$ (x=0), $SiO_x$ (0<x<2) and metal impurities, and comprises the $SiO_x$ (x=0) in an amount of 70 parts by weight or more based on 100 parts by weight of the silicon-based active material.

8. A method for preparing a negative electrode composition, the method comprising:

   forming a mixture by mixing a negative electrode conductive material and a negative electrode binder;
   performing a first mixing by adding water to the mixture; and
   performing a second mixing by adding an active material to the mixed mixture,
   wherein the negative electrode conductive material comprises a dot-shaped conductive material and a planar conductive material, and
   the planar conductive material has a BET specific surface area of 100.0 $m^2$/g or more.

9. The method of claim 8, wherein in the performing of the first mixing and second mixing, mixing is performed at 2,000 rpm to 3,000 rpm for 10 minutes to 60 minutes.

10. A negative electrode for a lithium secondary battery, comprising:

    a negative electrode current collector layer; and
    a negative electrode active material layer comprising the negative electrode composition according to any one of claims 1 to 7 formed on one surface or both surfaces of the negative electrode current collector layer.

11. The negative electrode of claim 10, wherein the negative electrode current collector layer has a thickness of 1 um or more and 100 um or less, and
    the negative electrode active material layer has a thickness of 20 um or more and 500 um or less.

12. A lithium secondary battery comprising:

    a positive electrode;
    the negative electrode for a lithium secondary battery according to claim 10;
    a separator provided between the positive electrode and the negative electrode; and
    an electrolyte.

[Figure 1]

[Figure 2]

## INTERNATIONAL SEARCH REPORT

| International application No. |
|---|
| **PCT/KR2022/015187** |

### A. CLASSIFICATION OF SUBJECT MATTER

**H01M 4/134**(2010.01)i; **H01M 4/131**(2010.01)i; **H01M 4/62**(2006.01)i; **H01M 4/1395**(2010.01)i; **H01M 4/1391**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/134(2010.01); H01M 10/052(2010.01); H01M 4/13(2010.01); H01M 4/133(2010.01); H01M 4/38(2006.01); H01M 4/62(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(negative electrode), 비표면적(specific surface area), 점형 도전재(particulate conductive material), 면형 도전재(planar conductive material)

### C. DOCUMENTS CONSIDERED TO BE RELEVANT

| Category* | Citation of document, with indication, where appropriate, of the relevant passages | Relevant to claim No. |
|---|---|---|
| Y | JP 2020-123465 A (GS YUASA CORP.) 13 August 2020 (2020-08-13)<br>See claims 1, 3 and 5; paragraphs [0002], [0034], [0036], [0039], [0049], [0050], [0053], [0061], [0098], [0106] and [0107]; and figure 1. | 1-12 |
| Y | JP 2014-182873 A (TOYO INK SC HOLDINGS CO., LTD.) 29 September 2014 (2014-09-29)<br>See abstract; claims 1 and 9; and paragraphs [0004] and [0021]. | 1-12 |
| A | KR 10-2020-0071543 A (LG CHEM, LTD.) 19 June 2020 (2020-06-19)<br>See claims 1-15. | 1-12 |
| A | KR 10-2016-0146580 A (LG CHEM, LTD.) 21 December 2016 (2016-12-21)<br>See entire document. | 1-12 |
| A | KR 10-2021-0000983 A (SAMSUNG SDI CO., LTD.) 06 January 2021 (2021-01-06)<br>See entire document. | 1-12 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 February 2023** | **03 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/015187**

| Patent document cited in search report | | | Publication date (day/month/year) | Patent family member(s) | | | Publication date (day/month/year) |
|---|---|---|---|---|---|---|---|
| JP | 2020-123465 | A | 13 August 2020 | None | | | |
| JP | 2014-182873 | A | 29 September 2014 | None | | | |
| KR | 10-2020-0071543 | A | 19 June 2020 | CN | 113785415 | A | 10 December 2021 |
| | | | | EP | 3872896 | A1 | 01 September 2021 |
| | | | | EP | 3872896 | A4 | 29 December 2021 |
| | | | | US | 2022-0029150 | A1 | 27 January 2022 |
| | | | | WO | 2020-122602 | A1 | 18 June 2020 |
| KR | 10-2016-0146580 | A | 21 December 2016 | CN | 107580732 | A | 12 January 2018 |
| | | | | CN | 107580732 | B | 27 October 2020 |
| | | | | EP | 3309879 | A1 | 18 April 2018 |
| | | | | EP | 3309879 | A4 | 02 May 2018 |
| | | | | EP | 3309879 | B1 | 03 October 2018 |
| | | | | JP | 2018-523281 | A | 16 August 2018 |
| | | | | JP | 6732294 | B2 | 29 July 2020 |
| | | | | KR | 10-1937897 | B1 | 14 January 2019 |
| | | | | US | 10476081 | B2 | 12 November 2019 |
| | | | | US | 2018-0159131 | A1 | 07 June 2018 |
| | | | | WO | 2016-200223 | A1 | 15 December 2016 |
| KR | 10-2021-0000983 | A | 06 January 2021 | US | 2020-0411844 | A1 | 31 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210133394

- JP 2009080971 A